# FASCICULE DE BREVET EUROPEEN

(11) **EP 3 681 644 B1**
(45) Date de publication et mention de la délivrance du brevet: **25.08.2021**
(21) Numéro de dépôt: 18773801.8
(22) Date de dépôt: 03.09.2018
(51) Int. Cl.: B05B 17/06, B05B 7/00, F24F 6/14, B60H 3/02, B64D 13/06

(54) **DISPOSITIF DE GENERATION DE GOUTTELETTES A PARTIR D'UN LIQUIDE COMPRENANT DES MOYENS AMELIORES DE DIFFUSION DU BROUILLARD, ET SON PROCEDE DE MISE EN OUVRE**
VORRICHTUNG ZUR ERZEUGUNG VON TRÖPFCHEN AUS EINER FLÜSSIGKEIT MIT VERBESSERTEN MITTELN ZUR DIFFUSION DES NEBELS UND VERFAHREN ZUR IMPLEMENTIERUNG DAVON
DEVICE FOR GENERATING DROPLETS FROM A LIQUID COMPRISING IMPROVED MEANS FOR DIFFUSION OF THE MIST, AND METHOD FOR IMPLEMENTING SAME

(30) Priorité: 11.09.2017 FR 1758339
(43) Date de publication de la demande: 22.07.2020
(73) Titulaire: ARECO FINANCES ET TECHNOLOGIE - ARFITEC, 06130 Grasse (FR)
(72) Inventeur: DECORDE, Nicolas, 06370 Mouans Sartoux (FR); GSCHWIND, Michel, 06130 Placassier (FR); RICHARD, Frédéric, 06220 Vallauris (FR); ROUSSEAU, Yves, 78322 Le Mesnil St Denis (FR); FEUILLARD, Vincent, 78322 Le Mesnil St Denis (FR); PETIT, Stéphane, 78322 Le Mesnil St Denis (FR)
(74) Mandataire: Schmidt, Martin Peter
(86) Numéro de dépôt international: PCT/FR2018/052143
(87) Numéro de publication internationale: WO 2019/048761

(56) Documents cités:
- FR-A1- 3 023 735
- US-A1- 2016 067 368

## Description

### Domaine technique de l'invention

L'invention concerne les dispositifs, plus particulièrement de petite taille, aptes à générer un brouillard de micro-gouttelettes d'un liquide, par exemple d'eau, dans le but de rafraîchir l'atmosphère. L'invention trouve son application principale à de tels dispositifs, qui peuvent être montés dans un véhicule pour humidifier et rafraîchir l'air et le rendre agréable à respirer. Néanmoins, ces dispositifs peuvent également être installés dans d'autres environnements, comme sur un étal pour humidifier et rafraîchir des produits frais exposés à la vente. Ils peuvent également être utilisés, afin d'assurer une régulation d'humidité dans les endroits confinés.

### Etat de la technique

Le brevet EP 0 691 162 décrit un dispositif de nébulisation équipé d'une buse de concentration, dans laquelle un élément piézoélectrique immergé dans l'eau génère un brouillard de gouttelettes d'eau à la sortie de la buse précitée. Le brouillard, qui est ensuite emporté par un courant d'air généré par un ventilateur, est extrait dans l'atmosphère via un orifice de diffusion. Cette buse est disposée verticalement, avec la sortie focalisante pointant vers le haut. Cette caractéristique est désavantageuse, dans la mesure où elle est coûteuse en énergie, car la nébulisation est réalisée à l'encontre du poids du liquide présent dans la buse.

On connait en outre, par exemple de EP 0 782 885, un dispositif dont la buse possède une sortie focalisante globalement dirigée vers le bas. Ce dispositif de nébulisation possède un ventilateur, situé sensiblement à la même altitude que l'élément piézoélectrique. En service, le brouillard sortant de la buse est dévié par un déflecteur, puis est emporté par le flux d'air créé par le ventilateur. L'orifice de diffusion est situé à peu près au droit de la sortie de la buse, au-dessous de cette dernière.

Ce dispositif de nébulisation connu présente cependant certains inconvénients. En effet la buse possède nécessairement une position verticale, avec sa sortie dirigée vers le bas, ce qui n'est pas toujours commode. Ce dispositif est en outre d'une structure relativement complexe, notamment en ce qu'il présente un nombre élevé d'éléments constitutifs. Par ailleurs, il peut être à l'origine de problèmes d'hygiène, dus en particulier à un phénomène de stagnation du liquide. Ce dispositif de nébulisation implique en outre un volume mort de liquide relativement élevé. De plus il a été constaté que d'éventuelles fuites de liquide, en service, sont difficiles à identifier. Enfin la nébulisation produite par ce dispositif n'est pas d'une bonne qualité dans toutes les situations fonctionnelles, en particulier lorsque le dispositif est utilisé dans un environnement subissant de fortes accélérations, comme par exemple un véhicule automobile.

La Demanderesse a tout d'abord proposé, par US 2016/067368, un dispositif de nébulisation comprenant une buse de nébulisation et, du côté opposé de l'orifice de sortie de cette buse, un élément piézo-électrique apte à émettre des ondes acoustiques dans le liquide. Par ailleurs, un réservoir de collecte alimente la buse en liquide, alors qu'une pompe de circulation génère dans la buse une pression de liquide suffisante pour maintenir un jet de liquide sortant par l'orifice de sortie. Enfin un tube d'écoulement recueille le jet de liquide sortant de l'orifice de sortie, afin de le vider dans le réservoir de collecte.

La Demanderesse a également proposé, par FR 3 023 735, un nébuliseur dans lequel l'axe de la buse est incliné par rapport à l'horizontale, selon un axe typiquement inférieur à 30°. Il est prévu un bac de collecte, ainsi qu'un tube d'écoulement s'étendant selon l'axe de la buse, qui est par conséquent lui aussi incliné. En service, un mélange de liquide et de gouttelettes, destinées à former du brouillard, s'écoulent dans le tube précité. Le liquide est retourné vers le bac de collecte, sans atteindre la sortie du tube, alors que le brouillard est extrait hors du tube en direction de l'environnement à rafraichir. Ce document prévoit de faire appel à un ventilateur qui dirige un flux d'air, soit perpendiculairement au jet de liquide, soit de manière parallèle à celui-ci.

Bien que les dispositifs connus par US 2016/067368 et FR 3 023 735 soient globalement satisfaisants, ils présentent cependant certains inconvénients. En effet, le tube d'écoulement présente une longueur conséquente, ce qui est désavantageux en termes d'encombrement global du dispositif. Par ailleurs, la configuration de ces nébuliseurs est relativement figée dans l'espace, de sorte qu'ils ne peuvent pas être aisément installés dans tous les types d'environnement. Enfin, ces dispositifs impliquent de faire typiquement appel à des moyens de ventilation, tout comme les dispositifs divulgués dans EP 0 691 162 et EP 0 782 885.

De façon générale, il existe un besoin pour des dispositifs de génération de gouttelettes, aptes à fonctionner de manière satisfaisante lorsqu'ils sont placés dans un environnement dit perturbé, à savoir soumis à des accélérations selon les différentes directions de l'espace. On citera notamment les véhicules terrestres, notamment automobiles, mais aussi aériens ou maritimes. Par ailleurs, les dispositifs de génération de gouttelettes utilisés sur des étals doivent aussi répondre à ces contraintes. En effet un étal peut également être perturbé par des chocs et d'autres perturbations mécaniques, dans la mesure où il est entouré par des personnes susceptibles d'entrer en contact mécanique avec lui.

Cela étant précisé, la présente invention se propose de remédier aux différents inconvénients de l'art antérieur évoqués ci-dessus. Elle vise donc à proposer un dispositif de génération de gouttelettes qui présente une structure compacte, en particulier selon la direction axiale du jet de liquide. L'invention vise également à proposer un tel dispositif, qui est susceptible de fonctionner en l'absence de moyens de ventilation.

L'invention vise en outre à proposer un tel dispositif, qui peut être installé selon différentes configurations. L'invention vise également à proposer un tel dispositif qui est apte à garantir une de génération de gouttelettes de qualité satisfaisante même dans un environnement perturbé, à savoir lorsqu'il est soumis à des accélérations importantes selon les différentes dimensions de l'espace. L'invention vise enfin à proposer un tel dispositif de de génération de gouttelettes, qui offre une précision de réglage satisfaisante, ainsi qu'un pilotage fiable.

### Objets de l'invention

A cet effet, l'invention a tout d'abord pour objet un dispositif de génération de gouttelettes à partir d'un liquide (I ; II ; III ; IV ; V ; VI ; VII) comportant :
- un corps creux (1 ; 101 ; 201 ; 301 ; 401 ; 501 ; 601) délimitant une enceinte de génération,
- des moyens (20, 22 ; 120 ; 220 ; 320 ; 420 ; 520 ; 620) de génération de gouttelettes à partir d'un jet de liquide (J) s'écoulant à l'intérieur de ladite enceinte,
- des moyens (8 ; 108 ; 208 ; 308 ; 408 ; 508 ; 685) d'évacuation d'une majeure partie du jet de liquide,
- ainsi que des moyens (6, 7 ; 106, 107 ; 206, 207 ; 306, 307 ; 406, 407 ; 506, 507) de diffusion de gouttelettes d'un brouillard, formé à partir dudit jet,
   ledit dispositif de génération étant caractérisé en ce que
- l'enceinte de génération comprend une chambre amont (5 ; 105 ; 205 ; 305 ; 405 ; 505), dite chambre commune, destinée à l'écoulement à la fois du liquide et des gouttelettes de brouillard, cette chambre s'étendant axialement en référence à l'enceinte,
- les moyens de diffusion comprennent au moins une branche de diffusion (6, 7 ; 106, 107 ; 206, 207 ; 306, 307 ; 406, 407 ; 506, 507), chaque branche s'étendant de manière oblique à partir de la chambre, à la fois radialement vers l'extérieur de cette chambre et axialement vers l'aval, en vue de dessus,
- et les moyens d'évacuation (8 ; 108 ; 208 ; 308 ; 408 ; 508 ; 685) prolongent ladite chambre commune vers l'aval, au-delà de la jonction entre la branche de diffusion et la chambre commune.

Selon d'autres caractéristiques de l'invention :
- ce dispositif est un générateur de fontaine acoustique,
- ce dispositif est un dispositif de nébulisation (I ; Il ; III ; IV ; V ; VI ; VII), dans lequel les moyens de génération comprennent une buse de nébulisation (20 ; 120 ; 220 ; 320 ; 420 ; 520 ; 620) pourvue d'au moins un orifice (23 ; 623) d'admission de liquide et d'au moins un orifice (21 ; 621) de sortie de liquide, ladite buse étant apte à générer un jet de liquide (J) à l'intérieur de ladite enceinte de nébulisation, et un élément piézo-électrique (22), prévu à l'opposé dudit orifice de sortie de ladite buse, apte à émettre des ondes acoustiques dans ledit liquide ; et la chambre commune s'étend axialement à partir de ladite buse,
- en vue de dessus, l'angle dit caractéristique (a6, a7), formé par l'axe principal (A1) du corps creux (1) et l'axe caractéristique (A6, A7) d'une branche respective, est compris entre 5 et 60°, en particulier entre 10 et 40°, notamment voisin de 30°,
- la longueur (L5) de la chambre commune (5) est comprise entre 50 et 300 millimètres, en particulier entre 100 et 200 millimètres, notamment voisine de 150 millimètres,
- la section longitudinale d'entrée (S64, S74) de chaque branche est comprise entre 30 et 150 millimètres, en particulier entre 60 et 100 millimètres, notamment voisine de 80 millimètres,
- la section longitudinale d'entrée (S64, S74) de chaque branche est égale à une fraction de la longueur (L5) de la chambre commune (5), ladite fraction étant comprise entre 75 et 100 %, en étant comprise en particulier entre 85 et 90 %,
- la section de passage dans chaque branche diminue vers l'aval,
- la chambre commune s'étend axialement à partir de ladite buse,
- il est prévu plusieurs branches, en particulier un nombre pair de branches, qui sont réparties angulairement de manière régulière autour de la chambre,
- les moyens d'évacuation comprennent un tube axial d'évacuation (8 ; 108 ; 208 ; 308 ; 408 ; 508), prolongeant ladite chambre commune vers l'aval, au-delà de la jonction entre la branche de diffusion et la chambre commune,
- la longueur (L8) du tube d'évacuation (8) est comprise entre 10 et 100 millimètres, notamment entre 20 et 50 millimètres,
- la section de passage dans le tube d'évacuation est sensiblement constante,
- le tube d'évacuation (8) est prolongé, vers l'aval, par un embout aval d'évacuation (85) de section décroissante vers l'aval, cet embout d'évacuation définissant un orifice aval (86) d'évacuation de liquide,
- les moyens de diffusion comprennent en outre au moins un embout de diffusion (68, 78), prolongeant chacun une branche de diffusion respective (6, 7), ainsi que des moyens de liaison amovible et/ou orientable entre cette branche et cet embout,
- le corps (1) comprend au moins une tétine amont d'évacuation de liquide (45 ; 645), chaque tétine définissant un orifice (45' ; 645') amont d'évacuation de liquide,
- le dispositif est dépourvu de moyens de ventilation,
- le dispositif comprend en outre des moyens de ventilation (3 ; 103 ; 203 ; 303 ; 403 ; 503) propres à générer un flux gazeux destiné à entraîner au moins une partie du liquide sortant de la buse, dans l'enceinte de génération de gouttelettes, ces moyens de ventilation comprenant un organe de ventilation (31) et un canal de ventilation (4 ; 104 ; 204 ; 304 ; 404 ; 504 ; 604), s'étendant à partir dudit organe de ventilation et débouchant dans l'enceinte, un passage intermédiaire (44 ; 144 ; 244 ; 344 ; 444 ; 544 ; 644), le flux gazeux généré par l'organe de ventilation étant propre à s'écouler, dans le passage intermédiaire, selon un premier trajet d'écoulement différent du trajet de génération de gouttelettes, et des moyens de renvoi (46 ; 646) propres à renvoyer le flux gazeux provenant du passage intermédiaire, radialement vers le centre de l'enceinte, selon un deuxième trajet d'écoulement sensiblement identique au trajet de génération de gouttelettes,
- l'extrémité amont du passage intermédiaire (44) est située, selon la direction de génération, en amont de la sortie (21) de l'organe d'admission (20) de liquide dans l'enceinte,
- vu en bout, le passage intermédiaire (44) s'étend à la périphérie extérieure de de l'organe d'admission (20),
- l'extrémité amont du passage intermédiaire (544 ; 644 ; 744) est située, selon la direction de de génération de gouttelettes, en aval de ladite sortie (21),
- la distance (D544 ; D644 ; D744) séparant, selon la direction de génération de gouttelettes, ladite sortie (521) et l'extrémité amont (544') du passage intermédiaire, est comprise entre 5 et 50 millimètres, notamment entre 10 et 30 millimètres, notamment voisine de 20 millimètres,
- le passage intermédiaire (44) est délimité par les parois en regard appartenant respectivement à un col amont (12) et à un fût aval (11) de section transversale inférieure à celle du col,
- la section transversale du fût (11) est supérieure à la section extérieure de l'organe d'admission (20),
- la dimension transversale ou hauteur (H44) du passage intermédiaire, est comprise entre 5 et 20 millimètres, notamment voisine de 10 millimètres,
- le fût (11) et le col (12) sont coaxiaux et délimitent un passage intermédiaire de forme annulaire,
- les moyens de renvoi comprennent des parois dites de renvoi (46) présentant une forme arrondie, dont la concavité est tournée vers l'arrière, en section longitudinale,
- vues de face, les parois de renvoi forment une couronne (46) située à la périphérie extérieure de l'organe d'admission (20), le bord intérieur (47') et le bord extérieur (47") de ladite couronne étant situés de part et d'autre du bord intérieur (44") du passage (44) intermédiaire,
- le canal de ventilation comprend un tronçon amont (41), prévu immédiatement à la sortie de l'organe de ventilation, les trajets d'écoulement d'air, respectivement dans le tronçon amont et dans le passage intermédiaire, étant mutuellement différents,
- le passage intermédiaire définit un trajet d'écoulement d'air, dont la direction d'écoulement d'air est sensiblement identique à la direction de génération et dont le sens d'écoulement d'air est inverse du sens de génération,
- les moyens de ventilation comprennent un module de ventilation, et il est prévu des moyens de fixation, notamment amovible du module de ventilation sur le corps dudit dispositif,
- le corps creux est creusé d'une découpe latérale délimitant un siège, destiné à la réception d'un raccord appartenant aux moyens de ventilation.

L'invention a en outre pour objet un procédé de mise en oeuvre d'un dispositif tel que ci-dessus, dans lequel :
- on admet du liquide dans l'enceinte,
- on fait s'écouler, dans la chambre commune, ledit liquide et un brouillard de gouttelettes formées à partir dudit liquide,
- on fait s'écouler, dans chaque branche de diffusion, une majorité de gouttelettes dites fines, dont la taille est inférieure à une valeur prédéterminée,
- on évacue, par les moyens d'évacuation, une fraction du liquide non transformée en gouttelettes et, éventuellement, des gouttelettes dites grosses, dont la taille est supérieure à ladite valeur prédéterminée.

Il est du mérite des inventeurs d'avoir observé et compris certains phénomènes physiques, sous-tendant la formation du brouillard par un dispositif de génération de gouttelettes. En effet ils ont notamment identifié que les fines gouttes, qui sont les plus avantageuses pour former un brouillard de bonne qualité, sont générées sur une faible distance axiale en sortie de la buse. En d'autres termes, la plus grande partie de ces fines gouttes est produite au terme d'une courte distance, de l'ordre d'une dizaine de centimètres pour des paramètres de fonctionnement classiques du dispositif.

Par conséquent, l'invention confère une grande compacité au dispositif de génération de gouttelettes, puisque le dimensionnement de ce dernier tient compte de l'existence de cette longueur, dite longueur utile. Par comparaison, l'art antérieur prévoit en général des dispositifs de grande dimension axiale. Dans ces conditions, leur zone aval est préjudiciable en termes d'encombrement, sans pour autant être efficace en termes de formation de brouillard.

La structure du dispositif conforme à l'invention reflète le phénomène physique, tel que décrit ci-dessus. Ce dispositif comprend tout d'abord une chambre commune, dont la longueur correspond avantageusement à la longueur utile précitée. Cette chambre commune est avantageusement prolongée, à l'opposé de la buse, par un tube central d'évacuation de liquide, ainsi que par au moins une branche radiale.

Chaque branche est destinée à collecter la majeure partie des fines gouttes, crées dans la chambre commune, puis à les diffuser dans l'environnement cible. On notera que l'orientation de chaque branche de diffusion présente avantageusement à la fois une composante radiale et une composante axiale, en référence à la direction de la chambre commune. Cela permet d'éviter tout changement de direction significatif des fines gouttes, tel un demi-tour comme prévu dans certaines solutions antérieures, en particulier lorsque les branches du dispositif conforme à l'invention s'étendent vers l'avant.

De la sorte, les chocs des fines gouttes contre d'éventuelles parois sont réduits, ce qui présente un double avantage. D'une part, le rendement de formation de brouillard est élevé. Par ailleurs, l'énergie cinétique des gouttes est préservée, le long de son trajet en direction de la sortie de chaque branche de diffusion. Par conséquent, le dispositif conforme à l'invention peut avantageusement être mis en service, même en l'absence de moyens de ventilation.

Les avantages ci-dessus, ainsi que d'autres avantages de l'invention, apparaîtront plus clairement à la lecture de la description ci-dessous.

### Description des figures

Les figures 1 à 22 illustrent des modes de réalisation de l'invention, mais ne limitent pas la portée de l'invention.
La figure 1 est une vue en perspective éclatée, illustrant les différents éléments constitutifs d'un dispositif de génération de gouttelettes conforme à un premier mode de réalisation de l'invention, ce dispositif de génération de gouttelettes étant un dispositif de nébulisation dans l'exemple illustré ;
Les figures 2 et 3 sont des vues en perspective selon deux angles différents, illustrant le dispositif de nébulisation conforme à l'invention.
Les figures 4 et 5 sont des coupes longitudinales, illustrant le dispositif de nébulisation des figures précédentes respectivement vu de côté et de dessus.
La figure 6a est une coupe longitudinale en vue de côté, analogue à la figure 4 mais à plus grande échelle, illustrant plus particulièrement des moyens de renvoi de l'air appartenant au dispositif de nébulisation conforme à l'invention.
La figure 6b est une vue de face, selon la flèche 6b de la figure 6a illustrant la buse et les moyens de renvoi d'air du dispositif.
La figure 7 est une coupe longitudinale en vue de dessus, analogue à la figure 5 mais à plus grande échelle, illustrant plus particulièrement certaines caractéristiques géométriques du dispositif de nébulisation conforme à l'invention.
Les figures 8 et 9 sont des coupes longitudinales analogues respectivement aux figures 4 et 5, montrant l'écoulement de l'air, du liquide et des gouttelettes de brouillard à l'intérieur du dispositif de nébulisation conforme à l'invention.
La figure 10 est une vue en perspective, analogue à la figure 2, illustrant une première variante de réalisation du dispositif de nébulisation, en ce qui concerne l'admission d'air.
La figure 11 est une coupe longitudinale en vue de côté, analogue à la figure 4, illustrant le dispositif de nébulisation de la figure 10.
La figure 12 est une vue en perspective, analogue à la figure 2, illustrant une deuxième variante de réalisation du dispositif de nébulisation, en ce qui concerne l'admission d'air.
La figure 13 est une coupe longitudinale en vue de côté, analogue à la figure 4, illustrant le dispositif de nébulisation de la figure 12.
La figure 14 est une vue en perspective, analogue à la figure 2, illustrant une troisième variante de réalisation du dispositif de nébulisation, en ce qui concerne l'admission d'air.
La figure 15 est une coupe longitudinale en vue de côté, analogue à la figure 4, illustrant le dispositif de nébulisation de la figure 14.
La figure 15a est une vue en perspective avec arrachements, illustrant le dispositif de nébulisation des figures 14 et 15.
La figure 16 est une vue en perspective, analogue à la figure 2, illustrant une quatrième variante de réalisation du dispositif de nébulisation, en ce qui concerne la diffusion de gouttelettes de brouillard.
La figure 17 est une coupe longitudinale en vue de côté, analogue à la figure 8, illustrant le dispositif de nébulisation de la figure 16.
La figure 18 est une coupe longitudinale en vue de côté, analogue à la figure 17, illustrant une cinquième variante de réalisation du dispositif de nébulisation, en ce qui concerne la diffusion de gouttelettes de brouillard.
La figure 19 est une vue en perspective, analogue à la figure 2, illustrant une sixième variante de réalisation, dans laquelle le dispositif de nébulisation conforme à l'invention présente des moyens de ventilation améliorés.
Les figures 20 et 21 sont des vues respectivement en coupe longitudinale de côté et de dessus, illustrant le dispositif de nébulisation de la figure 19.
La figure 22 est une coupe longitudinale en vue de côté à plus grande échelle, analogue à la figure 6a, illustrant la partie amont du dispositif de nébulisation des figures 19 à 21.

Les références numériques suivantes sont utilisées dans la présente description:

| | | | |
|---|---|---|---|
| I | Dispositif de nébulisation | 1 | Corps creux |
| A1 | Axe de 1 | 11 | Fût |
| 12 | Col | 11' | Extrémité amont de 11 |
| 13 | Découpe de 12 | 14 | Ouverture frontale |
| 15 | Bride de fermeture | 16 | Joint torique |
| 17 | Téton | 18 | Sièges |
| 20 | Buse | 21 | Orifice de sortie de 20 |
| 22 | Elément piézoélectrique | 24 | Support de 22 |
| 23 | Orifices d'admission de 20 | 21 | Orifice de sortie de 20 |
| 3 | Module de ventilation | 31 | Organe de ventilation |
| 32 | Filtre à air | 33 | Organe d'injection d'air |
| 34 | Raccord | 35 | Rebords |
| 4 | Canal de ventilation | 41 | Tronçon amont de 4 |
| 42 | Tronçon aval de 4 | 44 | Passage annulaire |
| 45 | Tétine | 45' | Orifice de 45 |
| 46 | Parois de renvoi | 47',47" | Bords de 46 |
| 48 | Extrémité arrière de 46 | | |
| 5 | Chambre commune | 51,52 | Entrée / Sortie de 5 |
| S5 | Section de 5 | L5 | Longueur de 5 |
| A5 | Axe longitudinal de 5 | T5 | Axe transversal de 5 |
| 60,70 | Echancrures latérales | 6,7 | Branches |
| 61,71 | Parois amont de 6,7 | 62,72 | Parois aval de 6,7 |
| 64,74 | Entrée de 6,7 | 65,75 | Point médian de 6,7 |
| 66,76 | Sortie de 6,7 | A6,A7 | Axe de 6,7 |
| S64,S74 | Section d'entrée de 6,7 | S65,S75 | Section médiane de 6,7 |
| D61,D71 | Distance entre 21 et 61,71 | 68,78 | Embout de diffusion |
| 69,79 | Orifice de diffusion | | |
| 8 | Tube d'évacuation | 81,82 | Entrée / Sortie de 8 |
| S8 | Section de 8 | L8 | Longueur de 8 |
| 85 | Embout d'évacuation | 86 | Orifice d'évacuation |
| F1-F3 | Ecoulement d'air | G1,G2 | Ecoulement des gouttes |
| II | Dispositif de nébulisation | 101 | Corps creux |
| 115 | Bride de fermeture | 120 | Buse |
| 103 | Module de ventilation | 104 | Canal de ventilation |
| 141 | Tronçon amont de 104 | 142 | Tronçon aval de 104 |
| 144 | Passage annulaire | 134 | Raccord |
| 105 | Chambre commune | 106,107 | Branches |
| 108 | Tube d'évacuation | 185 | Embout d'évacuation |
| 186 | Orifice d'évacuation | | |
| III | Dispositif de nébulisation | 201 | Corps creux |
| 215 | Bride de fermeture | 220 | Buse |
| 203 | Module de ventilation | 204 | Canal de ventilation |
| 241 | Tronçon amont de 204 | 242 | Tronçon aval de 204 |
| 244 | Passage annulaire | 234 | Raccord |
| 205 | Chambre commune | 206,207 | Branches |
| 208 | Tube d'évacuation | 285 | Embout d'évacuation |
| 286 | Orifice d'évacuation | | |
| IV | Dispositif de nébulisation | 301 | Corps creux |
| 315 | Bride de fermeture | 320 | Buse |
| 303 | Module de ventilation | 304 | Canal de ventilation |
| 341 | Tronçon amont de 304 | 342 | Tronçon aval de 304 |
| 344 | Passage annulaire | 334 | Raccord |
| 305 | Chambre commune | 306,307 | Branches |
| 308 | Tube d'évacuation | 385 | Embout d'évacuation |
| 386 | Orifice d'évacuation | | |
| V | Dispositif de nébulisation | 401 | Corps creux |
| 415 | Bride de fermeture | 420 | Buse |
| 403 | Module de ventilation | 404 | Canal de ventilation |
| 441 | Tronçon amont de 404 | 442 | Tronçon aval de 404 |
| 444 | Passage annulaire | 434 | Raccord |
| 405 | Chambre commune | 406,407 | Branches |
| 408 | Tube d'évacuation | 485 | Embout d'évacuation |
| 486 | Orifice d'évacuation | | |
| VI | Dispositif de nébulisation | 501 | Corps creux |
| 515 | Bride de fermeture | 520 | Buse |
| 503 | Module de ventilation | 504 | Canal de ventilation |
| 541 | Tronçon amont de 504 | 542 | Tronçon aval de 504 |
| 544 | Passage annulaire | 534 | Raccord |
| 505 | Chambre commune | 506,507 | Branches |
| 508 | Tube d'évacuation | 585 | Embout d'évacuation |
| 586 | Orifice d'évacuation | | |
| VII | Dispositif de nébulisation | 620 | Buse |
| 621 | Sortie de 620 | 623 | Orifices d'admission de 620 |
| 611 | Fût | 612 | Col |
| 611' | Extrémité de 611 | 604 | Canal de ventilation |
| 641 | Tronçon amont de 604 | 642 | Tronçon aval de 604 |
| 644 | Passage annulaire | D644 | Distance entre 621 et 644' |
| 644' | Extrémité de 644 | 206,207 | Branches |
| 645 | Tétine | 645' | Orifice de 645 |
| 646 | Parois de renvoi | 647',647" | Bords de 646 |
| 648 | Extrémité arrière de 646 | 685 | Goulotte d'évacuation |
| 686 | Orifice d'évacuation | | |

### Description détaillée

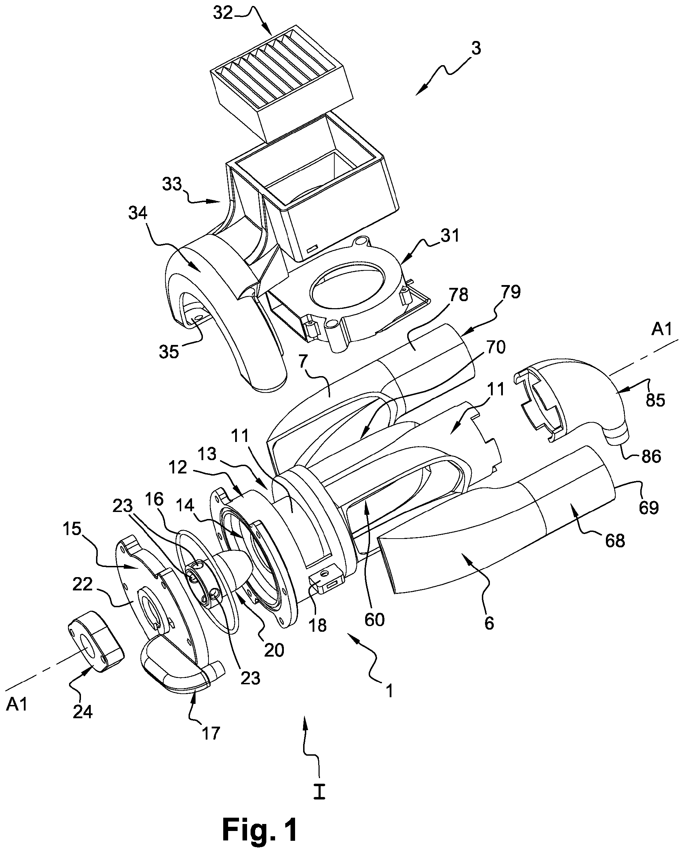

Les figures 1 à 9 illustrent un dispositif de génération de gouttelettes conforme à un premier mode de réalisation de l'invention, lequel est à titre d'exemple non limitatif un dispositif de nébulisation désigné dans son ensemble par la référence I. Ce dispositif I comprend tout d'abord un corps creux allongé 1, qui délimite une enceinte de nébulisation. On note A1 l'axe longitudinal principal de ce corps et de cette enceinte, lequel correspond à l'axe de la buse équipant le dispositif, comme on le verra ci-après. Cet axe principal A1 est sensiblement horizontal, dans l'exemple illustré. Cependant, comme cela sera expliqué dans ce qui suit, cet axe peut être oblique ou vertical. Dans ce qui suit les termes « avant » et « arrière », synonymes des termes respectivement « aval » et « amont », sont définis en référence à l'écoulement de fluide dans le corps creux.

Le corps comporte un fût principal 11 et un col secondaire 12, de plus grande section transversale, s'étendant vers l'arrière à partir du fût principal. Ce fût et ce col, qui sont cylindriques de section globalement circulaire, sont concentriques dans l'exemple illustré et s'étendent tous deux selon l'axe principal A1 ci-dessus. On note 11' l'extrémité amont, à savoir adjacente à la buse 20, du fût 11. Cette extrémité 11' est située en amont, à savoir en arrière, par rapport à la sortie de cette buse. Cela permet de conférer une grande compacité au dispositif de l'invention, selon la direction principale A1.

Le col 12 est creusé d'une découpe latérale 13, s'étendant sur une partie de la périphérie de ce col. Dans l'exemple illustré, cette découpe s'étend environ sur la moitié du col, soit un secteur angulaire d'environ 180°. Cette découpe permet de délimiter un siège pour la réception de moyens de ventilation, décrits plus en détail par la suite. On notera que cette découpe est ménagée globalement sur la partie supérieure du corps 1, ce qui permet d'éviter que l'eau ne s'échappe par gravité, hors du volume intérieur de ce corps. Ce col 12 est en outre pourvu d'une ouverture arrière frontale 14, obturée au moyen d'une bride de fermeture 15 avec interposition d'un joint torique 16. Cette bride est percée d'un trou, dans lequel s'étend une buse de concentration 20, de type connu en soi.

La buse 20 possède une paroi latérale interne, qui délimite un volume intérieur apte à contenir le liquide à pulvériser. La section transversale intérieure de cette paroi présente un rétrécissement progressif en direction d'un orifice 21 de sortie du liquide. A l'opposé de cet orifice 21, le volume intérieur précité est fermé par un élément (céramique) piézoélectrique 22, associé à un support 24. La bride précitée 15 est en outre pourvue d'un téton 17, de type connu en soi, qui peut être connecté à une conduite non représentée, destinée à l'alimentation en liquide en direction du volume intérieur de la buse 20.

L'élément 22 est apte à émettre des ondes acoustiques dans le liquide. La paroi interne de ladite buse est typiquement en un matériau dur apte à réfléchir les ondes acoustiques générées par ledit élément piézo-électrique 22. Un tel matériau présente typiquement une impédance acoustique, qui est suffisamment différente de celle de l'eau afin de réfléchir les ondes acoustiques. La forme convergente des parois internes de la buse 20 est déterminée de manière à faire focaliser les ondes acoustiques ultra-soniques à un endroit proche de la partie centrale de l'orifice de sortie 21. Cela permet de générer un brouillard de micro-gouttelettes du liquide à pulvériser lorsque la buse est remplie de liquide et lorsque la céramique 22 émet des ondes acoustiques de fréquence et intensité appropriées. La forme convergente des parois internes de la buse est avantageusement parabolique, ce qui améliore le rendement. De manière préférée, la forme des parois internes de la buse 20 montre une symétrie radiale.

D'une manière générale, l'élément céramique piézo-électrique 22 est de préférence de forme cylindrique, typiquement une plaquette de forme circulaire. A titre d'exemple non limitatif, il peut avoir un diamètre compris entre 10 mm et 30 mm, notamment entre 20 mm et 25 mm. L'orifice de sortie 21 a de préférence une forme circulaire. Dans un mode de réalisation, son diamètre est compris entre 2 et 10 mm, et avantageusement entre 4 et 6 mm. La hauteur intérieure de la buse est typiquement comprise entre 20 mm et 50 mm, typiquement voisine de 30 mm, sachant que cette distance correspond au champ proche des ultrasons générés par la céramique piézo-électrique 22.

De manière connue, la buse 20 comporte au moins un orifice d'admission de liquide permettant d'admettre le liquide à pulvériser dans le volume intérieur de la buse. On peut notamment prévoir des trous d'admission de liquide, ou bien un décalage vertical de la buse, maintenue par une première extrémité, qui permet une admission annulaire de liquide sur toute la partie située à l'extrémité opposée de cette buse. De manière préférée, une pluralité d'orifices d'admission sont aménagés autour de l'axe longitudinal de la buse, dans une zone proche de l'élément céramique piézo-électrique. Dans le présent exemple de réalisation, on retrouve quatre orifices d'admission 23 régulièrement répartis à la périphérie de la buse. La section d'admission de la buse 20, à savoir la somme des surfaces des orifices d'admission, est avantageusement supérieure à la section de l'orifice de sortie, de préférence au moins trois fois supérieure, afin de prévenir un manque d'eau et d'éviter le phénomène de cavitation dans la buse.

De façon connue en soi, la paroi latérale externe de la buse délimite, avec les faces en regard du corps, une zone de mise en pression pour le liquide. En service, cette dernière est en permanence remplie de liquide, ce qui garantit un fonctionnement optimal de l'élément piézoélectrique, même dans des conditions perturbées. De plus, cette zone de mise en pression communique avec le volume intérieur de la buse, via les orifices d'admission 23. La présence de la bride 15 est avantageuse, puisqu'elle permet tout d'abord de fermer la zone de mise en pression avec une étanchéité particulièrement satisfaisante. De plus, elle assure une fixation amovible de l'élément piézoélectrique, lequel peut donc être remplacé de manière simple et rapide.

Cette zone de mise en pression est alimentée en liquide grâce au téton précité 17, depuis un volume de collecte non représenté. La géométrie, les dimensions et l'emplacement de ce volume de collecte sont choisis en fonction de l'environnement, dit cible, dans lequel est implanté le dispositif de nébulisation selon l'invention. La circulation de liquide, depuis le volume de collecte en direction de la zone de mise en pression, est assurée de manière classique par au moins une pompe de type connu, qui n'est pas non plus représentée sur les figures.

La fréquence d'ultrasons est avantageusement comprise entre 1,3 MHz et 3 MHz, notamment entre 1,7 MHz et 2,4 MHz. L'élément piézo-électrique peut typiquement absorber une puissance électrique importante, dont une fraction est rendue sous forme d'énergie acoustique transmise au liquide, le reste étant dissipé sous forme thermique. On notera que, en service, l'élément piézo-électrique est constamment recouvert par le liquide ce qui évite sa détérioration par surchauffe.

Lorsque l'élément piézo-électrique 22 fonctionne à sec même pour une très courte durée, il risque d'être endommagé ou même être détruit. Pour éviter cela, on prévoit avantageusement des moyens permettant d'empêcher que ledit élément piézoélectrique ne fonctionne (i.e. n'émette pas d'ondes acoustiques ou seulement des ondes acoustiques de très faible puissance) lorsque l'élément piézo-électrique n'est pas immergé dans le liquide à pulvériser. Ces moyens, qui ne sont pas représentés sur les figures, peuvent prendre différentes formes.

De manière générale, on peut prévoir au moins un moyen de détection du manque de liquide et/ou un moyen de détection de l'échauffement de l'élément piézo-électrique et un moyen de rétroaction sur l'alimentation électrique dudit élément piézo-électrique. Ledit moyen de détection du manque de liquide peut être un capteur de niveau, un capteur à ultrasons, ou un capteur de présence qui coupe ou régule le fonctionnement de l'élément piézo-électrique. Ce capteur peut être un capteur optique ou un capteur capacitif ou encore un capteur inductif. Ce capteur peut être placé en tout emplacement approprié, dans le dispositif de nébulisation ou à sa périphérie.

Ledit moyen de détection du manque de liquide peut être un capteur qui détecte la présence du jet de liquide en sortie de l'orifice de sortie de la buse. Ce moyen est moins préféré car il entraîne un retard dans la détection d'un défaut d'immersion dudit élément piézo-électrique. Ledit moyen de détection du manque de liquide peut être un capteur de pression dans la buse et/ou à la sortie de la pompe de circulation. Un autre moyen pour détecter le manque de liquide dans la buse est un détecteur de la température à la surface et/ou à l'intérieur dudit élément piézo-électrique, ce qui permet de détecter l'échauffement rapide dudit élément piézo-électrique avant qu'il n'ait subi des dégâts importants.

Les moyens de ventilation sont réalisés sous forme d'un module de ventilation 3, lequel peut être fixé, notamment de manière amovible, sur le siège formé par les bords de la découpe 13, ménagée dans le col 12. Ce module comprend un organe actif de ventilation 31, ou ventilateur, de type connu en soi, qui est apte à souffler un flux gazeux, typiquement de l'air. Ce module comprend en outre un filtre à air 32, également de type classique. Le module 3 comprend enfin un organe d'injection d'air 33, qui permet de canaliser l'air provenant du ventilateur 31, en direction du volume intérieur du corps 1.

Cet organe 33 est muni d'un raccord 34, présentant une forme de demi-cercle en vue de face. Ce raccord 34 est propre à être plaqué contre les bords de la découpe 13, avec interposition de moyens d'étanchéité non représentés. A cet effet, des rebords 35, présents aux deux extrémités latérales du raccord 34, sont fixés sur des plots 18, formant sièges, prévus sur la face extérieure du col 12. La fixation mutuelle entre le raccord 34 et les plots 18 du corps 1 est avantageusement amovible, notamment grâce à des moyens de vissage non représentés. A titre d'exemple non limitatif, on peut prévoir d'utiliser une vis passant à travers le plot 18, laquelle vient se visser dans le raccord 34 au niveau de trous filetés, ménagés dans le rebord 35. A titre de variante, on peut prévoir tout type de moyens de fixation, en particulier tout type de moyens de fixation de type amovible.

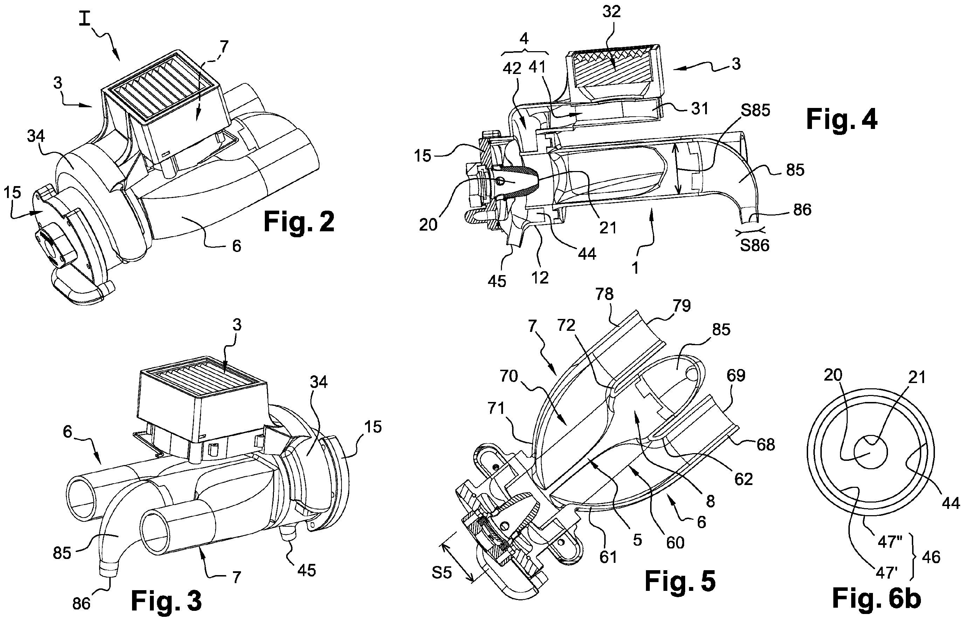

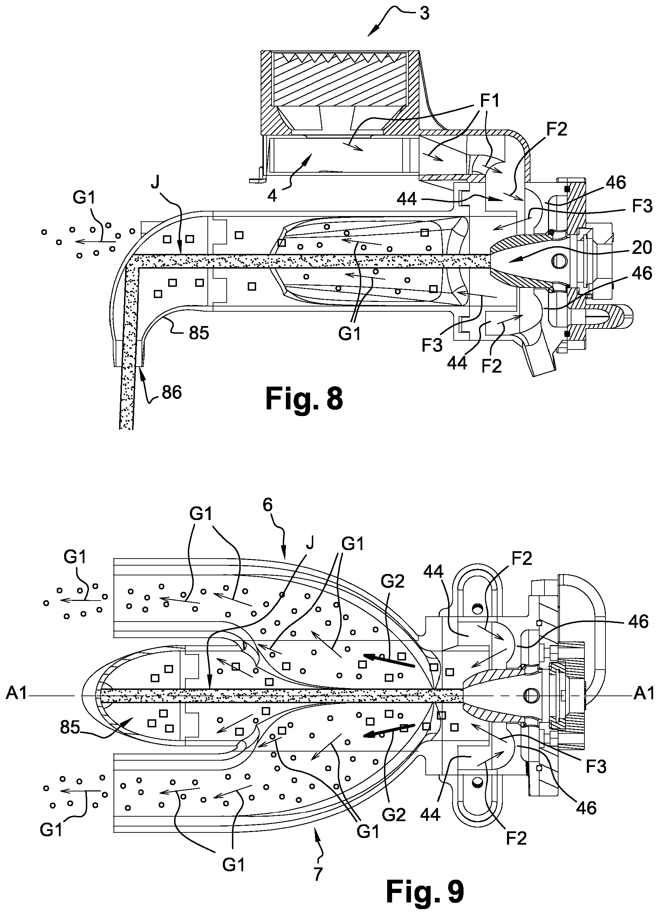

Comme le montrent notamment les figures 4 et 8, le ventilateur souffle en service de l'air à travers un canal dit de ventilation 4, ménagé dans l'organe d'injection 33. Ce canal possède un tronçon amont rectiligne 41, lequel s'étend axialement au-dessus de la face supérieure du fût principal. Ce tronçon amont se prolonge en un tronçon aval 42, qui s'étend selon une portion de couronne à l'intérieur du raccord 34. Ce tronçon aval débouche enfin dans un passage annulaire 44, délimité par les parois en regard du col 11 et du fût 12. Comme on le verra dans ce qui suit, ce passage 44 débouche dans l'enceinte de nébulisation. Par ailleurs, le col 12 est équipé d'une tétine 45 définissant un orifice amont d'évacuation 45', dont la fonction sera précisée dans ce qui suit.

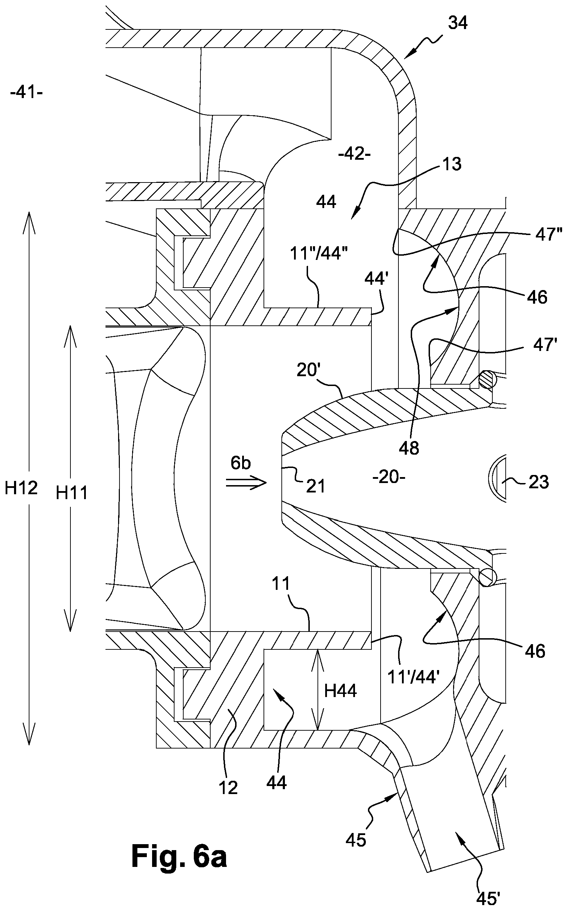

Le dispositif de nébulisation comprend en outre des moyens de renvoi, permettant de modifier la direction d'écoulement du flux gazeux depuis le passage annulaire vers le voisinage de la buse. Ces moyens de renvoi, qui sont illustrés notamment à plus grande échelle sur les figures 6a et 6b, comprennent des parois dites de renvoi 46. Vues de face, comme montré en figure 6b, ces parois 46 forment une couronne dont on note 47' et 47" les bords respectivement radialement intérieur et extérieur. En section longitudinale, comme montré en figure 6a, ces parois de renvoi présentant une forme arrondie, dont la concavité est tournée vers l'arrière.

On note 48 l'extrémité arrière de cette couronne 46, et on note que le bord intérieur 47' est situé en arrière du bord extérieur 47". Par ailleurs, vus de face, ce bord intérieur 47' et ce bord extérieur 47" sont situés de part et d'autre du bord intérieur 44" du passage 44, qui correspond à la face extérieure 11" du fût 11. Comme montré en figure 6b, cette couronne de renvoi 46 est située en périphérie de la buse 20. La forme de ces parois de renvoi permet de réduire les arêtes vives et, par conséquent, de limiter les perturbations du flux d'air ainsi que les turbulences.

Des valeurs dimensionnelles avantageuses, caractéristiques du dispositif de nébulisation conforme à l'invention, sont les suivantes (voir figures 6a et 6b):
- la section de passage, ou hauteur H44, du passage intermédiaire est comprise entre 5 et 20 mm, notamment voisine de 10 mm.
- la section transversale ou hauteur H11 du fût, au niveau de son extrémité amont, est comprise entre 25 et 55 mm, notamment entre 30 et 40 mm.

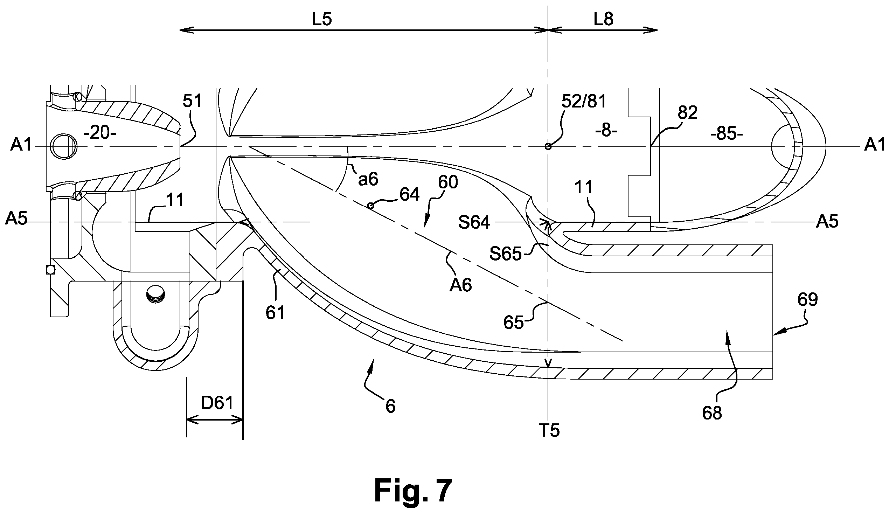

Comme illustré notamment sur la figure 7, l'axe longitudinal de la buse 20 est sensiblement parallèle à l'axe principal A1 du corps, à savoir qu'il est globalement horizontal dans l'exemple illustré. Selon l'invention, on peut prévoir que cet axe longitudinal est incliné par rapport à l'horizontale, voire vertical. De façon préférée cet axe de la buse forme, par rapport à l'horizontale, un angle compris entre -30° et +30°, notamment entre -15° et +15°. La valeur de cet angle est considérée « au repos », à savoir lorsque le dispositif selon l'invention est monté sur un support, comme un véhicule ou un étal, qui repose sur un sol horizontal en l'absence de perturbation dynamique.

En référence à nouveau à la perspective éclatée de la figure 1, le fût 11 du corps 1 est creusé de deux échancrures latérales 60 et 70, à partir desquelles s'étendent deux branches 6 et 7. Ces dernières peuvent être réalisées d'un seul tenant avec le fût, ou bien on peut prévoir des moyens de fixation amovible, de tout type approprié comme notamment par encliquetage, entre les parois des échancrures et les branches respectives. Dans le cas où les branches 6 et 7 sont fixées de manière amovible, les moyens de fixation doivent être étanches.

On note 61 et 71 les parois des branches 6 et 7, qui sont adjacentes à la buse 20. Ces parois 61 et 71 sont dénommées amont, en référence à leur positionnement par rapport à la buse, ou encore extérieure en référence au volume de chaque branche. On note en outre 62 et 72 les parois des branches 6 et 7, qui sont opposées à la buse 20. Ces parois 62 et 72 sont dénommées aval, en référence à leur positionnement par rapport à la buse, ou encore intérieure en référence au volume de chaque branche.

Ces branches 6 et 7 délimitent différentes régions fonctionnelles de l'enceinte de nébulisation, appartenant au dispositif de nébulisation I conforme à l'invention :
- une chambre amont 5, ou chambre commune, destinée à l'écoulement du liquide et de gouttelettes formées à partir de ce liquide. On note 51 l'entrée de cette chambre, qui correspond à la sortie de la buse 20, et 52 la sortie de cette chambre, qui correspond à la jonction entre chaque paroi aval 62, 72 de chaque branche 6, 7 et le fût 11. On note S5 la section de passage de cette chambre, selon une direction perpendiculaire à l'axe principal A1. Cette section S5, qui est sensiblement constante dans l'exemple illustré, est égale à la valeur H11 décrite ci-dessus, à savoir comprise entre 25 et 55 mm, en particulier entre 30 et 40 mm. La longueur L5 de cette chambre, qui correspond à la distance entre son entrée et sa sortie selon l'axe A1, est avantageusement comprise entre 50 et 500 mm, en particulier entre 50 et 150 mm, avantageusement entre 75 et 125 mm, notamment voisine de 100 mm,
- un tube 8 dit d'évacuation, prolongeant de manière coaxiale la chambre 5 à l'opposé de la buse 20. Ce tube est destiné à l'écoulement du liquide non nébulisé, auquel est éventuellement mélangée une fraction de gouttes de grande taille, encore nommées grosses gouttes. On note S8 la section de passage de ce tube, selon une direction perpendiculaire à l'axe principal A1. Cette section S8 est avantageusement voisine de celle S5 de ladite chambre. On note 81 l'entrée de ce tube, qui correspond à la sortie 52 de la chambre, et 82 la sortie de de ce tube. La longueur L8 de ce tube, qui correspond à la distance entre son entrée et sa sortie selon l'axe A1, est avantageusement comprise entre 10 et 50 mm, en particulier entre 10 et 30 mm, notamment voisine de 20 mm,
- un embout 85 dit d'évacuation prolonge le tube 8, à l'opposé de la chambre 5. Cet embout 85 peut être, selon un premier mode de réalisation, réalisé d'un seul tenant avec le tube 8. De façon préférée on peut prévoir des moyens de fixation amovible, de tout type approprié comme notamment par encliquetage, entre ces deux éléments mécaniques, du moment que cette liaison est étanche. Cet embout est terminé par un orifice 86, dit d'évacuation. La section de passage de l'embout décroit, de préférence de manière continue, en direction de cet orifice terminal 86. Cet orifice est mis en communication avec une conduite non représentée, assurant de manière connue l'évacuation du liquide vers le volume de collecte. De manière typique la section de l'orifice 86, qui correspond à celle de la conduite précitée, est voisine de 10 mm. Cela permet d'assurer une bonne évacuation gravitaire du liquide, au débit de fonctionnement nominal de la pompe assurant la circulation de ce liquide.

Chaque branche 6, 7 s'étend de manière oblique, à savoir d'une part radialement vers l'extérieur à partir de la chambre 5 et, d'autre part, axialement vers l'aval, c'est-à-dire à l'opposé de la buse 20. Les termes géométriques ci-dessus font référence à une vue dite de dessus, c'est-à-dire perpendiculairement à un plan s'étendant d'arrière en avant de l'ensemble du dispositif. Chaque branche est destinée à l'écoulement essentiellement de gouttelettes de petite taille, encore nommées fines gouttes. On note 64, 74 son entrée, qui correspond au point médian entre les faces en regard de ses parois extérieure et intérieure, selon l'axe longitudinal A5 (identifié sur la figure 7 en référence à l'entrée 64) passant par la paroi intérieure de la chambre. On note 65, 75 son point dit médian ou caractéristique, qui correspond au point médian entre les faces en regard de ses parois extérieure et intérieure, selon l'axe transversal T5 passant par la sortie 52 de la chambre commune 5. On note A6 et A7 l'axe caractéristique de chaque branche, qui relie son entrée 64, 74 à son point caractéristique 65, 75.

Pour chaque branche :
- l'angle dit caractéristique a6 et a7, formé par l'axe principal A1 et l'axe caractéristique A6 ou A7, est avantageusement compris entre 5 et 60°, en particulier entre 10 et 40°, notamment voisin de 30°,
- la section longitudinale d'entrée S64 ou S74, à savoir la distance séparant selon l'axe A1 les parois en regard au niveau de l'entrée 64 ou 74, est avantageusement comprise entre 30 et 150 mm, en particulier entre 60 et 100 mm, notamment voisine de 80 mm. Cette section S64 ou S74 correspond à une fraction de la longueur L5, comprise entre 75 et 100 %, en particulier entre 85 et 90 % de cette longueur L5,
- la section transversale d'entrée, à savoir la distance séparant selon l'axe vertical les parois en regard de la branche au niveau de l'entrée 64 ou 74, est avantageusement comprise entre 20 et 50 mm,
- la section médiane S65 ou S75, à savoir la distance séparant transversalement les parois en regard au niveau du point 65 ou 75, est avantageusement inférieure à la section longitudinale d'entrée S64 ou S74, telle que définie ci-dessus. Cette section médiane est typiquement voisine de la section de l'embout de diffusion 68, 78, lequel va être décrit dans ce qui suit,
- la distance D61 ou D71, séparant longitudinalement la sortie de buse et la paroi amont 61 ou 71, au niveau de sa face interne, est avantageusement comprise entre 1 et 50 mm, en particulier entre 5 et 20 mm.

Sur la figure 7 on a illustré uniquement les valeurs caractéristiques de la branche 6. Les valeurs caractéristiques de la branche 7 sont identiques, dans la mesure où les deux branches sont mutuellement symétriques par rapport à l'axe principal A1.

Chaque branche 6, 7 est prolongée, à l'opposé de la buse 20, par un embout respectif, dénommé embout de diffusion 68, 78. Cet embout, qui s'étend à partir de la sortie de chaque branche, est muni d'un orifice terminal 69, 79, dénommé orifice de diffusion, par lequel le brouillard est diffusé dans l'environnement cible. Les dimensions et/ou l'orientation de cet embout sont adaptés à cet environnement cible, notamment à la géométrie et à l'encombrement de ce dernier. On peut prévoir que chaque embout est fixé de manière permanente, ou bien avantageusement amovible, par rapport à la branche sur laquelle il est monté. On peut prévoir également une liaison étanche, par exemple de type soufflet, permettant de modifier l'orientation de cet embout par rapport à cette branche.

Les valeurs ci-dessus sont considérées dans la position de repos, telle que définie ci-dessus. Les altitudes des orifices sont prises au centre de ces derniers. Les distances sont prises entre les faces en regard des éléments mécaniques considérés.

Les figures 8 et 9 montrent de manière schématique le fonctionnement du dispositif de nébulisation conforme à l'invention, tel que décrit ci-dessus. On remplit tout d'abord le volume de collecte, de façon connue en soi. Puis on met en marche la pompe de circulation, de sorte que le liquide remplit progressivement le volume intérieur du corps 1. Le liquide est ensuite admis dans la buse 20, via les orifices d'admission 23. Un jet J de liquide s'écoule alors selon l'axe A1 à partir de l'orifice de sortie 21, à savoir de manière globalement horizontale dans l'exemple. L'élément piézoélectrique est ensuite mis en service, de manière à générer des gouttelettes de brouillard s'écoulant dans le volume intérieur du corps, comme cela va être détaillé dans ce qui suit.

On actionne par ailleurs, typiquement de façon continue, le ventilateur 31 de manière à générer un flux d'air dont le trajet est illustré sur les figures 6a, 8 et 9. Cet air s'écoule tout d'abord dans le canal de ventilation 4 selon les flèches F1, sensiblement à contre-courant du jet de liquide J. Puis cet air subit un premier changement de direction, avant d'être admis dans le passage annulaire 44 selon les flèches F2. Dans ce passage 44, le trajet d'écoulement d'air présente une direction d'écoulement d'air sensiblement identique à la direction de nébulisation. Ces deux directions sont définies par l'axe A1, à savoir globalement horizontales dans l'exemple illustré. En revanche, le sens d'écoulement d'air dans le passage 44 est inverse du sens de nébulisation, à savoir que l'air s'écoule de gauche à droite sur les figures 6a, 8 et 9, alors que le jet de liquide s'écoule de droite à gauche sur ces mêmes figures.

A l'extrémité aval du passage 44, l'air frappe alors les parois de renvoi 46, décrites ci-dessus. La forme arrondie de ces parois assure un deuxième changement de direction du flux d'air, sans cependant générer de trop fortes turbulences. L'air s'écoule enfin dans la chambre commune 5 selon la flèche F3, au voisinage de la buse, sensiblement à co-courant du jet de liquide. On notera que les filets élémentaires de cet écoulement d'air sont particulièrement homogènes, à la fois en termes de direction et de vitesse.

La présence du passage annulaire 44 et des moyens de renvoi 46, tels que décrits ci-dessus, est avantageuse. En effet, les inventeurs ont constaté que, au voisinage de la buse, le flux gazeux présente une homogénéité très satisfaisante. En d'autres termes, tous les filets composant ce flux présentent sensiblement la même vitesse et la même direction. Cela permet de créer un écoulement laminaire de liquide et d'air, ce qui contribue à limiter les turbulences d'air et ainsi conduire les fines gouttelettes générées vers la sortie de manière stable directive afin d'empêcher le choc des gouttelettes entre elles et sur les parois du conduit.

Un brouillard de gouttelettes, qui est formé sous l'action de l'élément piézo-électrique, est emporté par le flux d'air précité. Ce brouillard est formé par un mélange de gouttelettes dites fines, dont le diamètre est inférieur à environ 5 micromètres, et de gouttelettes dites grosses dont le diamètre est supérieur à cette dernière valeur. Sur les figures 8 et 9, les fines gouttelettes sont par illustrées par des cercles de faible dimension, alors que leur direction d'écoulement est matérialisée par les flèches G1. Par ailleurs, les grosses gouttelettes sont par illustrées par des carrés de plus grande dimension que celle des cercles ci-dessus, alors que leur direction d'écoulement est matérialisée par les flèches G2.

Les gouttelettes fines sont, en grande majorité, dirigées vers chaque branche 6, 7, avant d'être diffusées dans l'environnement par les embouts de diffusion. Comme expliqué ci-dessus, ces fines gouttes ne subissent pas de chocs significatifs contre les parois, en particulier grâce à la valeur de l'angle a6, a7 formé entre chaque branche et la chambre commune 5. En revanche, le jet de liquide J s'écoule axialement dans la chambre commune 5 puis dans le tube d'évacuation 8. Ce liquide est alors dirigé, via l'embout d'évacuation 85, vers l'orifice de sortie 86 puis le volume de collecte, avant d'être recyclé vers l'entrée de la buse. Ce liquide peut être mélangé à une faible fraction de grosses gouttelettes, lesquelles sont sensiblement absentes à l'intérieur des branches de diffusion.

La présence de l'embout 85, de section décroissante vers l'aval, présente des avantages spécifiques. En effet elle permet d'éviter l'obstruction intempestive de la chambre commune 5, avec du liquide provenant de la fraction non nébulisée du jet J. Cet embout 85 coopère avantageusement en combinaison avec la tétine 45, puisque cette dernière assure également une fonction d'évacuation de liquide. Cette tétine trouve en particulier son application lorsque le liquide a tendance à stagner, notamment par gravité, également au voisinage de la partie amont du corps 1.

Cette tétine 45 et cet embout 85 assurent tous deux une fonction d'évacuation du liquide. De manière plus précise, lorsque le dispositif est globalement à plat, la majorité du liquide est évacuée par l'embout 85, alors qu'une plus faible fraction de ce liquide est évacuée par la tétine 45. Lorsque le dispositif est orienté vers le haut, à savoir que l'entrée 51 de la chambre 5 est située à une altitude inférieure à celle de sa sortie 52, la grande majorité du liquide est évacuée par la tétine 45 alors que l'embout 85 permet éventuellement l'évacuation d'une très faible fraction de ce liquide. Par ailleurs lorsque le dispositif est orienté vers le bas, à savoir que l'entrée 51 est située à une altitude supérieure à celle de la sortie 52, sensiblement la totalité du liquide est évacuée par l'embout 85.

Lorsque le niveau de liquide tel que détecté par le capteur de présence d'eau est insuffisant pour assurer que l'élément piézo-électrique 22 est totalement immergé, une boucle de rétroaction interrompt ou diminue le fonctionnement de cet élément piézoélectrique. Si cette baisse de niveau se prolonge au-delà d'une certaine durée, de l'eau est rajoutée dans le volume intérieur de l'enceinte. L'ajout d'eau peut aussi se faire de manière permanente, de manière continue ou discontinue, par exemple à l'aide d'une pompe péristaltique (non montrée sur les figures), afin de compenser la perte d'eau due à la nébulisation.

Selon une variante avantageuse, on peut prévoir de mesurer, de façon continue ou à intervalles réguliers, la vitesse de rotation de la pompe. Si on constate une brusque augmentation de cette vitesse, ceci peut signifier que la pompe tourne, non plus dans l'eau, mais dans l'air. En d'autres termes, la quantité de liquide présente dans le dispositif est insuffisante. La boucle de rétroaction précitée agit sur l'élément piézoélectrique, de manière analogue à celle décrite au paragraphe précédent.

Selon une autre variante avantageuse, on peut prévoir de mesurer, de façon continue ou à intervalles réguliers, la puissance de l'élément piézoélectrique. Si on constate un brusque changement de cette puissance, ceci peut signifier qu'il y a un manque d'eau dans la buse ou dans le bac sous pression. On ajuste alors le débit de la pompe, de manière à ajuster le débit d'eau en fonction de la puissance acoustique (le débit de la pompe doit avantageusement être augmenté en fonction de la puissance électrique envoyé à l'élément piézoélectrique).

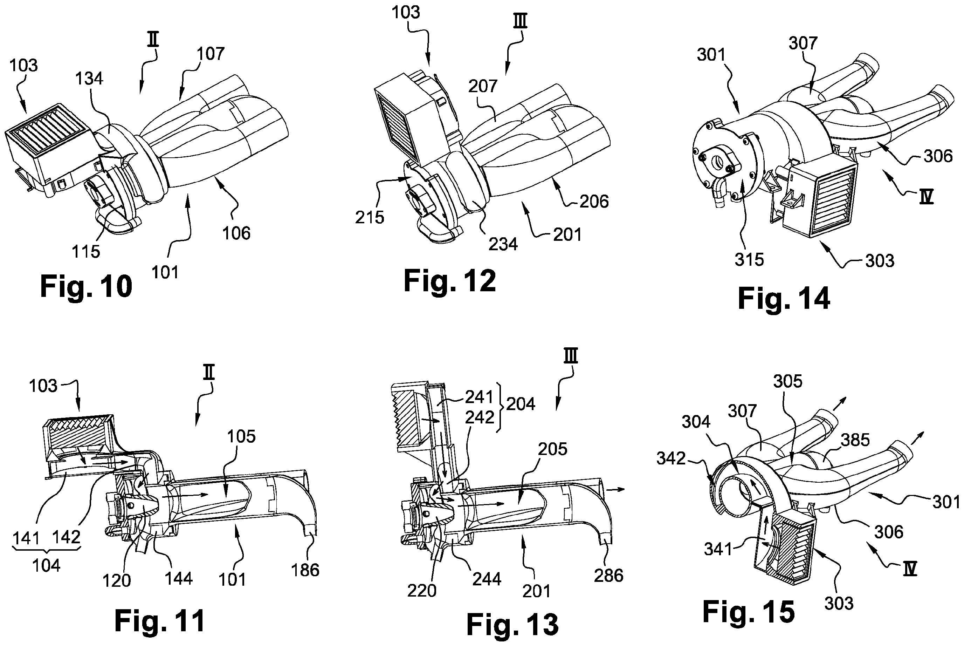

Les figures 10 et 11 illustrent un deuxième mode de réalisation du dispositif de nébulisation, conforme à l'invention. Sur ces figures, les éléments mécaniques analogues à ceux des figures 1 à 9 y sont affectés des mêmes numéros de référence, augmentés de 100.

Le dispositif de nébulisation II de ce deuxième mode de réalisation diffère de celui I du premier mode de réalisation, notamment en ce que son canal de ventilation 104 présente un tronçon amont 141 situé en arrière de la buse 120. Dans ces conditions, l'air s'écoule sensiblement à co-courant du jet de liquide J dans ce tronçon 141, avant d'être renvoyé radialement vers l'intérieur par les parois du tronçon aval 142. L'air débouche ensuite dans le passage annulaire 144, avant d'être admis dans la chambre commune 105.

Les figures 12 et 13 illustrent un troisième mode de réalisation du dispositif de nébulisation, conforme à l'invention. Sur ces figures, les éléments mécaniques analogues à ceux des figures 1 à 9 y sont affectés des mêmes numéros de référence, augmentés de 200.

Le dispositif de nébulisation III de ce troisième mode de réalisation diffère de celui I du premier mode de réalisation, notamment en ce que son canal de ventilation 204 présente un tronçon amont 241 s'étendant radialement vers l'extérieur à partir du corps 201. Dans ces conditions, l'air s'écoule sensiblement à courant croisé par rapport au jet de liquide J dans ce tronçon 241, avant d'être renvoyé vers l'arrière par les parois du tronçon aval 242. L'air débouche ensuite dans le passage annulaire 244, avant d'être admis dans la chambre commune 205.

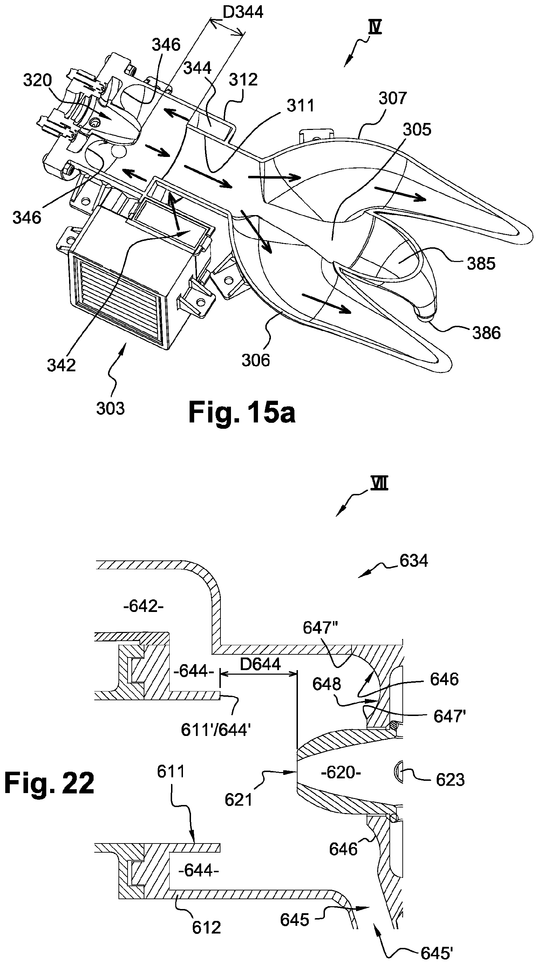

Les figures 14 et 15 illustrent un quatrième mode de réalisation du dispositif de nébulisation, conforme à l'invention. Sur ces figures, les éléments mécaniques analogues à ceux des figures 1 à 9 y sont affectés des mêmes numéros de référence, augmentés de 300.

Le dispositif de nébulisation IV de ce quatrième mode de réalisation diffère de celui I du premier mode de réalisation, notamment en ce que le canal de ventilation 304 s'étend en majeure partie à la périphérie extérieure du corps 301. Vu en bout, à savoir selon l'axe longitudinal du corps sur la figure 15, ce canal 304 forme un tronçon d'anneau, périphérique au corps 301. La section aval 342 de ce canal 304 débouche dans le passage annulaire 344 défini, de manière analogue aux premiers modes de réalisation, par le fût 311 et le col 312.

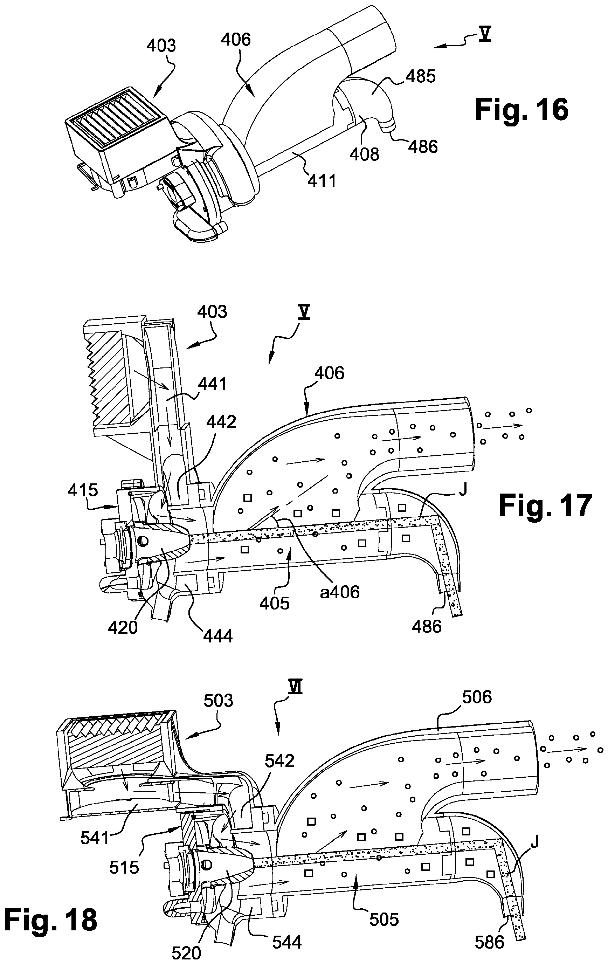

Les figures 16 et 17 illustrent un cinquième mode de réalisation du dispositif de nébulisation, conforme à l'invention. Sur ces figures, les éléments mécaniques analogues à ceux des figures 1 à 9 y sont affectés des mêmes numéros de référence, augmentés de 400.

Le dispositif de nébulisation V de ce cinquième mode de réalisation diffère de celui I du premier mode de réalisation, notamment en ce qu'il est pourvu d'une unique branche 406, s'étendant de manière oblique à partir du fût 411. Dans cet exemple, cette branche 406 est placée au-dessus du fût, à savoir au voisinage des moyens de ventilation 403. Pour cette raison, on préfère utiliser une alimentation en air telle que celle du dispositif II des figures 10 et 11. La valeur de l'angle a406 est située dans une plage de valeurs, telle que celle de l'angle a6 décrit ci-dessus.

La figure 18 illustre un sixième mode de réalisation du dispositif de nébulisation, conforme à l'invention. Sur cette figure, les éléments mécaniques analogues à ceux des figures 1 à 9 y sont affectés des mêmes numéros de référence, augmentés de 500.

Le dispositif de nébulisation VI de ce sixième mode de réalisation est similaire à celui V décrit immédiatement ci-dessus, à savoir qu'il est pourvu d'une unique branche 506. L'alimentation en air est analogue à celle du dispositif III des figures 12 et 13.

A titre de variante supplémentaire, non représentée, on peut prévoir plus de deux branches, en particulier réparties angulairement de façon régulière. A titre d'exemple on peut prévoir trois branches, espacées deux à deux angulairement de 120°, ou bien quatre branches espacées deux à deux angulairement de 90°. A titre de variante supplémentaire, on peut prévoir une unique branche, qui s'étend de manière annulaire en périphérie du tube d'écoulement.

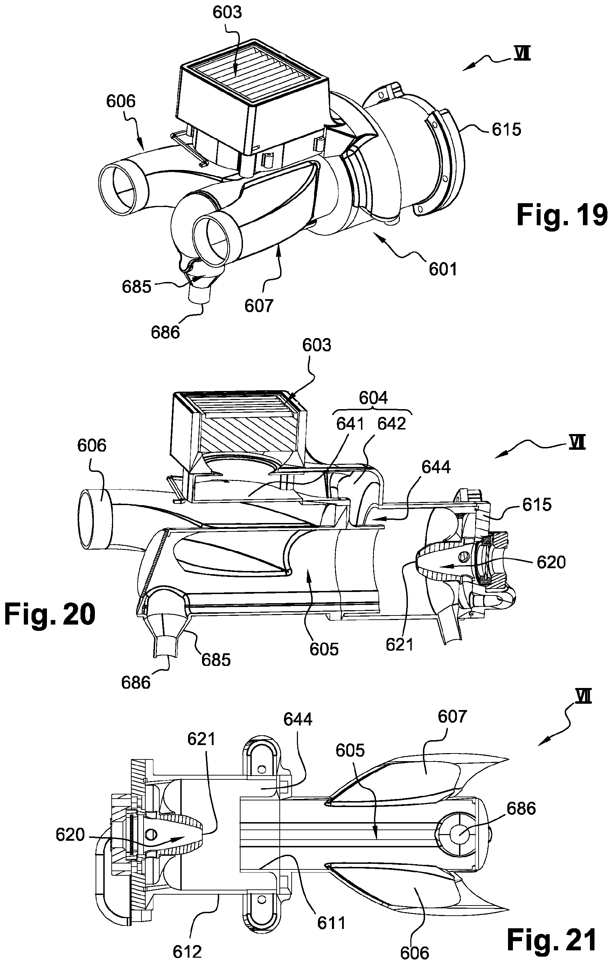

Les figures 19 à 22 illustrent un septième mode de réalisation du dispositif de nébulisation, conforme à l'invention. Sur ces figures, les éléments mécaniques analogues à ceux des figures 1 à 9 y sont affectés des mêmes numéros de référence, augmentés de 600.

Le dispositif de nébulisation VII de ce sixième mode de réalisation diffère de celui I en ce que l'extrémité amont 644' du passage annulaire 644 est située en aval de la sortie 621 de la buse 620, comme montré notamment à grande échelle sur la figure 22. De manière avantageuse la distance D644 séparant, selon la direction de nébulisation, la sortie 621 de la buse 620 et l'extrémité amont 644' du passage intermédiaire 644 est comprise entre 10 et 30 mm, notamment entre 15 et 25 mm. Cette extrémité 644' correspond à l'extrémité amont 611' du fût 611.

Ce dispositif VII diffère également de celui I, en ce qu'il est dépourvu de tube d'évacuation s'étendant dans le prolongement de la chambre commune. Dans le dispositif VII, la chambre commune 605 est prolongée par une goulotte d'évacuation 685, s'étendant transversalement par rapport à cette chambre, à savoir vers le bas dans l'exemple illustré. Cette goulotte, de forme globalement tronconique évasée vers l'amont, est terminée par un orifice d'évacuation 686.

La variante des figures 19 à 22 est avantageuse, notamment en termes de qualité de globale de nébulisation. Sans vouloir être lié par la théorie, en faisant varier la distance D644, il a été observé que dans les conditions d'essais, une distance de 20mm semblait donner la plus grande quantité de brouillard généré en sortie de l'appareil. Par ailleurs, la simulation monophasique du cheminement de l'air dans une configuration identique montre une maximisation de l'homogénéité du flux d'air dans le conduit de diffusion. Cela permet de conclure qu'il est avantageux de jouer sur les paramètres géométriques pour homogénéiser le flux d'air dans le conduit, afin de minimiser les turbulences et ainsi favoriser l'extraction des gouttelettes générées.

L'invention n'est pas limitée aux exemples décrits ci-dessus.

Dans les différents modes de réalisation des figures 1 à 18, les branches de diffusion sont combinées à des moyens de ventilation, qui comprennent notamment des moyens de renvoi. Néanmoins, on peut prévoir que ces branches obliques peuvent être combinées à des moyens de ventilation différents, de tout type approprié. A cet égard, ces moyens de ventilation non représentés peuvent être ceux décrits dans l'art antérieur, notamment dans FR 3 023 735.

Par ailleurs, selon une variante particulièrement avantageuse, le dispositif conforme à l'invention peut être dépourvu de tels moyens de ventilation. En effet, comme expliqué ci-dessus, la réduction des chocs subis par les fines gouttes contre les parois préserve leur énergie cinétique, le long du trajet de ces gouttes vers la sortie des branches de diffusion.

A titre de variante supplémentaire, non illustrée, on peut prévoir que les gouttelettes de liquide, diffusées dans l'environnement cible, contiennent un additif de tout type souhaité, à des fins de désinfection, de désodorisation ou analogues. Dans cet esprit, prévoir un additif à base d'huile essentielle est avantageux.

On peut également prévoir d'équiper le dispositif conforme à l'invention avec un moyen assurant la désinfection du liquide, contenu dans l'enceinte. Un tel moyen de désinfection peut être de tout type approprié, notamment par choc thermique (résistance chauffante) ou encore à base de LED UV (Light Emitting Diodes Ultraviolet).

De manière plus générale, l'invention trouve son application à des dispositifs de génération de gouttelettes, qui sont d'un type différent de celui décrit sur les figures, à savoir différent d'un dispositif de nébulisation. Ce dispositif de génération de gouttelettes peut, entre autres, être de type générateur à membrane ou de type générateur de fontaine acoustique.

## Revendications

1. Dispositif de génération de gouttelettes à partir d'un liquide (I ; Il ; III ; IV ; V ; VI ; VII) comportant :
- un corps creux (1 ; 101 ; 201 ; 301 ; 401 ; 501 ; 601) délimitant une enceinte de génération,
- des moyens (20, 22 ; 120 ; 220 ; 320 ; 420 ; 520 ; 620) de génération de gouttelettes à partir d'un jet de liquide (J) s'écoulant à l'intérieur de ladite enceinte,
- des moyens (8; 108; 208 ; 308; 408; 508; 685) d'évacuation d'une majeure partie du jet de liquide,
- ainsi que des moyens (6, 7 ; 106, 107 ; 206, 207 ; 306, 307 ; 406, 407 ; 506, 507) de diffusion de gouttelettes d'un brouillard, formé à partir dudit jet,
ledit dispositif de génération étant **caractérisé en ce que**
- l'enceinte de génération comprend une chambre amont (5 ; 105 ; 205 ; 305 ; 405 ; 505), dite chambre commune, destinée à l'écoulement à la fois du liquide et des gouttelettes de brouillard, cette chambre s'étendant axialement en référence à l'enceinte,
- les moyens de diffusion comprennent au moins une branche de diffusion (6, 7 ; 106, 107 ; 206, 207 ; 306, 307 ; 406, 407 ; 506, 507), chaque branche s'étendant de manière oblique à partir de la chambre, à la fois radialement vers l'extérieur de cette chambre et axialement vers l'aval, en vue de dessus, et
- les moyens d'évacuation (8 ; 108 ; 208 ; 308 ; 408 ; 508 ; 685) prolongent ladite chambre commune vers l'aval, au-delà de la jonction entre la branche de diffusion et la chambre commune.

2. Dispositif selon la revendication 1, **caractérisé en ce que** ce dispositif est un dispositif de nébulisation (I ; Il ; III ; IV ; V ; VI ; VII), dans lequel
- les moyens de génération comprennent une buse de nébulisation (20 ; 120 ; 220 ; 320 ; 420 ; 520 ; 620) pourvue d'au moins un orifice (23 ; 623) d'admission de liquide et d'au moins un orifice (21 ; 621) de sortie de liquide, ladite buse étant apte à générer un jet de liquide (J) à l'intérieur de ladite enceinte de nébulisation, et un élément piézo-électrique (22), prévu à l'opposé dudit orifice de sortie de ladite buse, apte à émettre des ondes acoustiques dans ledit liquide.

3. Dispositif selon l'une des revendications précédentes, **caractérisé en ce que**, en vue de dessus, l'angle dit caractéristique (a6, a7), formé par l'axe principal (A1) du corps creux (1) et l'axe caractéristique (A6, A7) d'une branche respective, est compris entre 5 et 60°, en particulier entre 10 et 40°, notamment voisin de 30°.

4. Dispositif selon l'une des revendications précédentes, **caractérisé en ce que** la longueur (L5) de la chambre commune (5) est comprise entre 50 et 300 millimètres, en particulier entre 100 et 200 millimètres, notamment voisine de 150 millimètres.

5. Dispositif selon l'une des revendications précédentes, **caractérisé en ce que** la section longitudinale d'entrée (S64, S74) de chaque branche est égale à une fraction de la longueur (L5) de la chambre commune (5), ladite fraction étant comprise entre 75 et 100 %, en étant comprise en particulier entre 85 et 90 %.

6. Dispositif selon l'une des revendications précédentes, **caractérisé en ce que** la section longitudinale d'entrée (S64, S74) de chaque branche est comprise entre 30 et 150 millimètres, en particulier entre 60 et 100 millimètres, notamment voisine de 80 millimètres.

7. Dispositif selon l'une des revendications précédentes, **caractérisé en ce que** la section de passage dans chaque branche diminue vers l'aval.

8. Dispositif selon l'une des revendications précédentes, **caractérisé en ce que** la chambre commune s'étend axialement à partir de ladite buse.

9. Dispositif selon l'une des revendications précédentes, **caractérisé en ce qu'**il est prévu plusieurs branches, en particulier un nombre pair de branches, qui sont réparties angulairement de manière régulière autour de la chambre.

10. Dispositif selon l'une des revendications précédentes, **caractérisé en ce que** les moyens d'évacuation comprennent un tube axial d'évacuation (8 ; 108 ; 208 ; 308 ; 408 ; 508), prolongeant ladite chambre commune vers l'aval, au-delà de la jonction entre la branche de diffusion et la chambre commune, le tube d'évacuation (8) étant notamment prolongé, à l'opposé de la buse (20), par un embout aval d'évacuation (85) de section décroissante vers l'aval, cet embout aval d'évacuation définissant un orifice aval (86) d'évacuation de liquide.

11. Dispositif selon l'une des revendications précédentes, **caractérisé en ce que** les moyens de diffusion comprennent en outre au moins un embout de diffusion (68, 78), prolongeant chacun une branche de diffusion respective (6, 7), ainsi que des moyens de liaison amovible et/ou orientable entre cette branche et cet embout.

12. Dispositif selon l'une des revendications précédentes, **caractérisé en ce que** le corps (1) comprend au moins une tétine amont d'évacuation de liquide (45 ; 645), définissant un orifice (45' ; 645') amont d'évacuation de liquide.

13. Dispositif selon l'une des revendications précédentes, **caractérisé en ce qu'**il est dépourvu de moyens de ventilation.

14. Dispositif selon l'une des revendications 1 à 12, **caractérisé en ce que** le dispositif comprend en outre des moyens de ventilation (3 ; 103 ; 203 ; 303 ; 403 ; 503) propres à générer un flux gazeux destiné à entraîner au moins une partie du liquide sortant de la buse, dans l'enceinte de génération de gouttelettes, ces moyens de ventilation comprenant un organe de ventilation (31) et un canal de ventilation (4 ; 104 ; 204 ; 304 ; 404 ; 504 ; 604), s'étendant à partir dudit organe de ventilation et débouchant dans l'enceinte, un passage intermédiaire (44 ; 144 ; 244 ; 344 ; 444 ; 544 ; 644), le flux gazeux généré par l'organe de ventilation étant propre à s'écouler, dans le passage intermédiaire, selon un premier trajet d'écoulement différent du trajet de génération de gouttelettes, et des moyens de renvoi (46 ; 646) propres à renvoyer le flux gazeux provenant du passage intermédiaire, radialement vers le centre de l'enceinte, selon un deuxième trajet d'écoulement sensiblement identique au trajet de génération de gouttelettes.

15. Procédé de mise en œuvre d'un dispositif selon l'une des revendications précédentes, dans lequel :
- on admet du liquide dans l'enceinte,
- on fait s'écouler, dans la chambre commune, ledit liquide et un brouillard de gouttelettes formées à partir dudit liquide,
- on fait s'écouler, dans chaque branche de diffusion, une majorité de gouttelettes dites fines, dont la taille est inférieure à une valeur prédéterminée,
- on évacue, par les moyens d'évacuation, une fraction du liquide non transformée en gouttelettes et, éventuellement, des gouttelettes dites grosses, dont la taille est supérieure à ladite valeur prédéterminée.

## Patentansprüche

1. Vorrichtung zur Erzeugung von Tröpfchen aus einer Flüssigkeit (I; II; III; IV; V; VI; VII), Folgendes beinhaltend:
- einen Hohlkörper (1; 101; 201; 301; 401; 501; 601), der ein Erzeugungsgehäuse begrenzt,
- Mittel (20; 22; 120; 220; 320; 420; 520; 620) zum Erzeugen von Tröpfchen aus einem Flüssigkeitsstrahl (J), der im Inneren des Gehäuses strömt,
- Mittel (8; 108; 208; 308; 408; 508; 685) zum Ausbringen eines Großteils des Flüssigkeitsstrahls,
- sowie Mittel (6, 7; 106, 107; 206, 207; 306, 307; 406, 407; 506, 507) zur Diffusion von Tröpfchen eines Nebels, der aus dem Strahl gebildet wird,
wobei die Vorrichtung zur Erzeugung **dadurch gekennzeichnet ist, dass**
- das Erzeugungsgehäuse eine stromaufwärtige Kammer (5; 105; 205; 305; 405; 505), gemeinsame Kammer genannt, umfasst, die zum Strömen von gleichzeitig der Flüssigkeit und der Nebeltröpfchen bestimmt ist, wobei sich diese Kammer in Bezug auf das Gehäuse axial erstreckt,
- die Diffusionsmittel mindestens einen Diffusionszweig (6, 7; 106, 107; 206, 207; 306, 307; 406, 407; 506, 507) umfassen, wobei sich jeder Zweig in Draufsicht in schräger Form aus der Kammer gleichzeitig radial nach außerhalb dieser Kammer, und axial stromabwärts erstreckt, und
- die Mittel (8; 108; 208; 308; 408; 508; 685) zum Ausbringen die gemeinsame Kammer stromabwärts über die Verbindung zwischen dem Diffusionszweig und der gemeinsamen Kammer hinaus verlängert.

2. Vorrichtung nach Anspruch 1, **dadurch gekennzeichnet, dass** diese Vorrichtung eine Zerstäubungsvorrichtung (I; II; III; IV; V; VI; VII) ist, wobei
- die Erzeugungsmittel eine Zerstäubungsdüse (20; 120; 220; 320; 420; 520; 620) umfassen, die mit mindestens einer Einlassöffnung (23; 623) einer Flüssigkeit und mindestens einer Ausgangsöffnung (21; 621) einer Flüssigkeit versehen ist, wobei die Düse imstande ist, einen Flüssigkeitsstrahl (J) im Inneren des Zerstäubungsgehäuses zu erzeugen, und ein piezoelektrisches Element (22), das gegenüber der Ausgangsöffnung der Düse vorgesehen ist, das imstande ist, akustische Wellen in der Flüssigkeit auszustrahlen.

3. Vorrichtung nach einem der vorstehenden Ansprüche, **dadurch gekennzeichnet, dass** in der Draufsicht der sogenannte charakteristische Winkel (a6, a7), der durch die Hauptachse (A1) des Hohlkörpers (1) und die charakteristische Achse (A6, A7) eines jeweiligen Zweiges gebildet wird, zwischen 5 und 60°, im Besonderen zwischen 10 und 40° enthalten, insbesondere nahe 30° gelegen ist.

4. Vorrichtung nach einem der vorstehenden Ansprüche, **dadurch gekennzeichnet, dass** die Länge (L5) der gemeinsamen Kammer (5) zwischen 50 und 300 Millimeter, im Besonderen zwichen 100 und 200 Millimeter enthalten, insbesondere nahe 150 Millimeter gelegen ist.

5. Vorrichtung nach einem der vorstehenden Ansprüche, **dadurch gekennzeichnet, dass** der Eingangslängsschnitt (S64, S74) eines jeden Zweiges gleich einer Fraktion der Länge (L5) der gemeinsamen Kammer (5) ist, wobei die Fraktion zwischen 75 und 100 % liegt, im Besonderen zwischen 85 und 90 % liegt.

6. Vorrichtung nach einem der vorstehenden Ansprüche, **dadurch gekennzeichnet, dass** der Eingangslängsschnitt (S64, S74) eines jeden Zweiges zwischen 30 und 150 Millimeter, im Besonderen zwischen 60 und 100 Millimeter enthalten, insbesondere nahe 80 Millimeter liegt.

7. Vorrichtung nach einem der vorstehenden Ansprüche, **dadurch gekennzeichnet, dass** der Durchgangsquerschnitt in jedem Zweig stromabwärts abnimmt.

8. Vorrichtung nach einem der vorstehenden Ansprüche, **dadurch gekennzeichnet, dass** sich die gemeinsame Kammer axial aus der Düse erstreckt.

9. Vorrichtung nach einem der vorstehenden Ansprüche, **dadurch gekennzeichnet, dass** mehrere Zweige, im Besonderen eine gerade Zahl an Zweigen vorgesehen sind, die winkelig in regelmäßiger Form um die Kammer herum verteilt sind.

10. Vorrichtung nach einem der vorstehenden Ansprüche, **dadurch gekennzeichnet, dass** die Mittel zum Ausbringen ein axiales Ausbringungsrohr (8; 108; 208; 308; 408; 508) umfassen, das die gemeinsame Kammer stromabwärts über die Verindung zwischen dem Diffusionszweig und der gemeinsamen Kammer hinaus verlängert, wobei das Ausbringungsrohr (8) insbesondere gegenüber der Düse (20) durch ein stromabwärtiges Ausbringungsendstück (85) mit stromabwärts abnehmendem Querschnitt verlängert wird, wobei dieses stromabwärtige Ausbringungsendstück eine stromabwärtige Flüssigkeitsausbringungsöffnung (86) definiert.

11. Vorrichtung nach einem der vorstehenden Ansprüche, **dadurch gekennzeichnet, dass** die Diffusionsmittel weiter mindestens ein Diffusionsendstück (68, 78) umfassen, das jeweils einen jeweiligen Diffusionszweig (6, 7) verlängert, sowie abnehmbare und/oder ausrichtbare Verbindungsmittel zwischen diesem Zweig und diesem Endstück.

12. Vorrichtung nach einem der vorstehenden Ansprüche, **dadurch gekennzeichnet, dass** der Körper (1) mindestens einen stromaufwärtigen Flüssigkeitsausbringungssauger (45; 645) umfasst, der eine stromaufwärtige Flüssigkeitsausbringungsöffnung (45'; 645') definiert.

13. Vorrichtung nach einem der vorstehenden Ansprüche, **dadurch gekennzeichnet, dass** sie nicht mit Lüftungsmitteln versehen ist.

14. Vorrichtung nach einem der Ansprüche 1 bis 12, **dadurch gekennzeichnet, dass** die Vorrichtung weiter Lüftungsmittel (3; 103; 203; 303; 403; 503) umfasst, die geeignet sind, einen Gasfluss zu erzeugen, der dazu bestimmt ist, mindestens einen Teil der aus der Düse austretenden Flüssigkeit in dem Tröpfchenerzeugungsgehäuse anzutreiben, wobei diese Lüftungsmittel ein Lüftungsorgan (31) und einen Lüftungskanal (4; 104; 204; 304; 404; 504; 604) umfassen, der sich aus dem Lüftungsorgan erstreckt und in das Gehäuse mündet, einen Zwischendurchgang (44; 144; 244; 344; 444; 544; 644), wobei der durch das Lüftungsorgan erzeugte Gasfluss geeignet ist, in dem Zwischendurchgang entlang einer ersten Strömungsroute zu strömen, die sich von der Tröpfchenerzeugugsroute unterscheidet, und Umlenkmittel (46; 646), die geeignet sind, den aus dem Zwischendurchgang kommenden Gasfluss entlang einer zweiten Strömungsroute, im Wesentlichen identisch mit der Tröpfchenerzeugugsroute, radial zur Mitte des Gehäuses zurückzuführen.

15. Verfahren zur Anwendung einer Vorrichtung nach einem der vorstehenden Ansprüche, bei dem:
- Flüssigkeit in dem Gehäuse aufgenommen wird,
- die Flüssigkeit und ein aus der Flüssigkeit gebildeter Tröpfchennebel in der gemeinsamen Kammer strömen gelassen wird,
- in jedem Diffusionszweig eine Mehrheit an sogenannten feinen Tröpfchen, deren Größe kleiner als ein vorbestimmter Wert ist, strömen gelassen wird,
- eine Fraktion der nicht in Tröpfchen umgewandelten Flüssigkeit und eventuell sogenannte große Tröpfchen, deren Größe größer als der vorbestimmte Wert ist, durch die Ausbringungsmittel ausgebracht werden.

## Claims

1. Device for generating droplets from a liquid(I; II; III; IV; V; VI; VII) comprising:
- a hollow body (1; 101; 201; 301; 401; 501; 601) delimiting a generation enclosure,
- means (20, 22; 120; 220; 320; 420; 520; 620) for generating droplets from a liquid jet (J) flowing inside said enclosure,
- means (8; 108; 208; 308; 408; 508; 685) for evacuating a major portion of the liquid jet,
- as well as means (6, 7; 106, 107; 206, 207; 306, 307; 406, 407; 506, 507) for diffusing droplets from a mist, formed from said jet,
said generating device being **characterised in that**
- the generation enclosure comprises an upstream chamber (5; 105; 205; 305; 405; 505), referred to as a common chamber, designed for the flow of both the liquid and mist droplets, this chamber extending axially with respect to the enclosure,
- the diffusion means comprise at least one diffusion branch (6, 7; 106, 107; 206, 207; 306, 307; 406, 407; 506, 507), each branch extending obliquely from the chamber, both radially outwards from this chamber and axially downstream, as viewed from above, and
- the evacuation means (8; 108; 208; 308; 408; 508; 685) extend said common chamber downstream, beyond the junction between the diffusion branch and the common chamber.

2. Device according to claim 1, **characterised in that** this device is a nebulising device (I; II; III; IV; V; VI; VII), wherein
- the generating means comprise a nebulising nozzle (20; 120; 220; 320; 420; 520; 620) provided with at least one inlet opening (23; 623) for admitting liquid and at least one outlet opening (21; 621) for releasing liquid, said nozzle being capable of generating a liquid jet (J) inside said nebulising enclosure, and a piezo-electric element (22), provided opposite said outlet opening of said nozzle, capable of emitting acoustic waves into said liquid.

3. Device according to any of the preceding claims, **characterised in that**, in a view from above, the angle referred to as characteristic (a6, a7), formed by the main axis (A1) of the hollow body (1) and the characteristic axis (A6, A7) of a respective branch, is between 5 and 60°, in particular between 10 and 40°, particularly close to 30°.

4. Device according to any of the preceding claims, **characterised in that** the length (L5) of the common chamber (5) is between 50 and 300 millimetres, in particular between 100 and 200 millimetres, particularly close to 150 millimetres.

5. Device according to any of the preceding claims, **characterised in that** the longitudinal inlet section (S64, S74) of each branch is equal to a fraction of the length (L5) of the common chamber (5), said fraction being between 75 and 100%, being in particular between 85 and 90%.

6. Device according to any of the preceding claims, **characterised in that** the longitudinal inlet section (S64, S74) of each branch is between 30 and 150 millimetres, in particular between 60 and 100 millimetres, particularly close to 80 millimetres.

7. Device according to any of the preceding claims, **characterised in that** the flow cross-section in each branch decreases downstream.

8. Device according to any of the preceding claims, **characterised in that** the common chamber extends axially from said nozzle.

9. Device according to any of the preceding claims, **characterised in that** a plurality of branches are provided, in particular an even number of branches, which are distributed angularly in a regular manner around the chamber.

10. Device according to any of the preceding claims, **characterised in that** the evacuation means comprise an axial evacuation tube (8; 108; 208; 308; 408; 508), extending said common chamber downstream beyond the junction between the diffusion branch and the common chamber, the evacuation tube (8) being extended in particular, opposite the nozzle (20), by a downstream evacuation tip (85) with a cross-section decreasing downstream, this downstream evacuation tip defining a downstream opening (86) for evacuating liquid.

11. Device according to any of the preceding claims, **characterised in that** the diffusion means further comprise at least one diffusion tip (68, 78), each extending a respective diffusion branch (6, 7), as well as removable and/or orientable connection means between this branch and this tip.

12. Device according to any of the preceding claims, **characterised in that** the body (1) comprises at least one upstream liquid evacuation nipple (45; 645) defining an upstream opening (45'; 645') for evacuating liquid.

13. Device according to any of the preceding claims, **characterised in that** it has no ventilation means.

14. Device according to any of claims 1 to 12, **characterised in that** the device further comprises ventilation means (3; 103; 203; 303; 403; 503) capable of generating a gas flow intended to drive at least a portion of the liquid released from the nozzle in the enclosure for generating droplets, these ventilation means comprising a ventilation member (31) and a ventilation channel (4; 104; 204; 304; 404; 504; 604), extending from said ventilation member and opening into the enclosure, an intermediate passage (44; 144; 244; 344; 444; 544; 644), the gas flow generated by the ventilation member being capable of flowing, in the intermediate passage, according to a first flow path different from the droplet generation path, and return means (46; 646) capable of returning the gas flow from the intermediate passage radially towards the centre of the enclosure, according to a second flow path substantially identical to the droplet generation path.

15. Method for operating a device according to any of the preceding claims, wherein:
- liquid is admitted to the enclosure,
- said liquid and a mist of droplets formed from said liquid are caused to flow into the common chamber,
- a majority of so-called fine droplets, the size of which is smaller than a predetermined value, are caused to flow into each diffusion branch,
- a fraction of the liquid not transformed into droplets and, optionally, so-called large droplets, the size of which is greater than the said predetermined value, are evacuated by the evacuating means.
